Europäisches Patentamt

(19) European Patent Office

Office européen des brevets

(11) Publication number: **0 092 920**
**B1**

(12) **EUROPEAN PATENT SPECIFICATION**

(45) Date of publication of patent specification: **04.03.87**

(51) Int. Cl.⁴: **F 01 D 25/16, F 16 C 17/04**

(21) Application number: **83301916.9**

(22) Date of filing: **06.04.83**

(54) Turbocharger.

(30) Priority: **22.04.82 GB 8211698**

(43) Date of publication of application:
**02.11.83 Bulletin 83/44**

(45) Publication of the grant of the patent:
**04.03.87 Bulletin 87/10**

(84) Designated Contracting States:
**DE FR GB**

(56) References cited:
**FR-A-2 224 666**
**GB-A- 279 847**
**GB-A-1 006 327**
**US-A-2 218 034**

(73) Proprietor: **HOLSET ENGINEERING COMPANY LIMITED**
**P.O. Box A9**
**Turnbridge Huddersfield, HD1 6RD (GB)**

(72) Inventor: **Miller, Steven Maurice**
**12 Harrington Court Meltham**
**Huddersfield HD7 3ED West Yorkshire (GB)**

(74) Representative: **Kinrade, John et al**
**Marks & Clerk Scottish Life House Bridge Street**
**Manchester M3 3DP (GB)**

Courier Press, Leamington Spa, England.

## Description

This invention concerns a turbocharger.

Turbochargers are known in which a turbine wheel to be driven by exhaust gas from an internal combustion engine is arranged to drive a compressor wheel for compressing combustion air to be supplied to the engine.

In a known turbocharger the turbine and compressor wheels are both fast with a common shaft which is substantially held against axial displacement by a thrust bearing facing a rotating counter-thrust surface provided on the shaft. The counter-thrust surface is in a first plane which is substantially at a right-angle to the shaft axis, and it is intended that a second plane, in which the thrust bearing lies, should be parallel to the first plane. Because of play in various bearings supporting the rotating shaft, the shaft axis describes a conical figure. As a result the first plane is inclined to the second so that the gap between them takes on a wedge-like shape narrowest where the radially outermost portion of the counterthrust surface is closest to the thrust bearing. As the shaft traces the conical figure the narrowest gap between the counter-thrust surface and the thrust bearing moves around the latter. The efficiency of such a turbocharger which can rotate at high speed, for example 120,000 r.p.m. is impaired by friction acting on the shaft. One source of friction is the retarding effect that the development of shear forces in lubricating oil in the gap between the thrust bearing and the counter-thrust surface has. Since the thrust bearing is stationary the oil lamina next to it is also substantially stationary whereas the oil lamina next to counter-thrust surface moves at substantially the angular velocity of the counter-thrust surface. Thus across the oil layer there is a velocity gradient which becomes higher the thinner the oil layer, and accordingly the shear force increases the thinner the oil layer (assuming the oil viscosity remains substantially constant). Therefore since the aforesaid gap is narrowed due to the shaft describing the conical figure, the frictional force retarding the shaft increases.

To reduce the development of increased frictional force when a shaft acting on the thrust bearing describes a conical figure as the shaft rotates, tapered-land thrust bearings have been used. These can comprise a plate formed with an aperture to receive the shaft, and the plate being also formed with a plurality of tapered lands providing bearing surfaces disposed in succession in an annular array about the shaft, each bearing surface having a wedge-like shape extending from a low end towards the other or high end so that there is a step-down from the high end of one bearing surface to the level of the low end of the succeeding bearing surface. It should be understood that the terms "high", "low", "step-down" and "level" are used herein in relation to tapered-land thrust bearings in an illustrative or figurative sense with the intention of merely identifying different portions of a wedge-like shape and are not intended to impose any orientational limitation on the disposition of the bearing surfaces.

As the counter-thrust surface slides across the bearing surfaces from low to high end, and as the shaft executes a conical movement, the counter-thrust surface progressively increases the pressure in the lubricating oil (even though some oil escapes beyond the edge of the bearing surfaces) and therefore provides the thrust load carrying capacity of the oil between the counter-thrust surface and the bearing surfaces. The pressure is a maximum when the counter-thrust surface is tilted towards the high end of a bearing surface.

It is only when the counter-thrust surface is tilted towards the high end that maximum friction, due to the shear forces acting on the oil, occurs. At other times friction due to shearing is less. Thus, instead of this maximum friction occurring throughout the description of the conical figure by the shaft, it only occurs the number of times during that description that the counter-thrust surface is tilted towards the high end of any bearing surface. So the aggregate effect of friction due to shearing of the oil is less using a tapered-land bearing.

Friction between the counter-thrust surface and the tapered-land thrust bearing is a function of the aggregate of the areas of the bearing surfaces. Because the inner diameter of the annular array of bearing surfaces is determined by the diameter of the aperture which is itself determined to a great extent by the diameter of the shaft, the aforesaid aggregate area is reduced in known bearings by making the outer diameter of the annular array of bearing surfaces as small as practicable. Nevertheless, as stated above maximum friction due to shearing occurs at a high end of each bearing surface.

French Patent Specification No. FR—A—2224666 describes a turbo-charger comprising a thrust bearing facing a rotating plane counter-thrust surface. The thrust bearing is provided with a series of inclined bearing surfaces and a plurality of recesses each of which is disposed between a respective pair of bearing surfaces. Each of the inclined surfaces terminates in the direction of rotation in a flat surface which is at the same level relative to the bearing surfaces as the highest end of the inclined surfaces. Thus when the turbo-charger shaft executes a conical movement the gap between the counter-thrust bearing and the flat surfaces tapers and an area of minimum oil thickness results adjacent the radially outer edge of each of the flat surfaces in turn. High shear forces result in the area of minimum oil thickness.

United States Patent Specification No. US—A—2218034 addresses the problem of lubricant being squeezed out of zones between nominally parallel bearing surfaces as a result of the gap between the nominally parallel surfaces becoming tapered. The document proposes to solve the problem by adapting the stiffness of the members carrying the bearing surfaces to each other so that the members can deform to compensate for non-parallelism of the two bearing surfaces.

It is an object of the present invention to provide a turbo-charger with a thrust bearing which can accommodate conical movement of the turbo-charger rotary shaft.

According to the present invention there is provided a turbo-charger comprising a rotary shaft extending through an aperture in an axial thrust bearing facing a rotating plane counter-thrust surface supported by the shaft and perpendicular to the axis of said shaft, the thrust bearing comprising a plurality of bearing surfaces disposed in succession in an annular array about the aperture, and a plurality of recesses each one of which is disposed between adjacent portions of a respective pair of bearing surfaces, the thrust bearing defining a datum plane which is perpendicular to the nominal axis of said shaft, each bearing surface being inclined to said datum plane so as to extend between circumferentially spaced low and high ends, the high end of each bearing surface being circumferentially spaced from the low end in the direction of rotation of the counter-thrust surface, and the edge of the high end of each bearing surface extending both radially inwards and in the direction of rotation of the counter-thrust surface so as to be inclined to the radial direction, characterised in that the said edge of the high end is defined by the boundary of the respective recess and the said edge of the high end is inclined downwards relative to the datum plane in the radially outwards direction.

As the recesses are immediately adjacent the high ends of the bearing surfaces and the high ends of the bearing surfaces are inclined downwards relative to the datum plane the area of minimum oil thickness is reduced substantially to line contact even when the turbo-charger shaft executes a conical motion.

A radially extending step may be formed between a portion of the high end of one bearing surface and the low end of the adjacent bearing surface. Each recess may be formed substantially in accordance with the expression

$$\tan \psi = \frac{\tan \alpha}{\tan \phi},$$

in which $\alpha$ is the cone angle of conical rotation of the counter-thrust surface, $\phi$ is the angle of the slope of the bearing surface of each sector or tapered land, and $\psi$ is the angle between the radially extending step and said edge of the high end of the adjacent bearing surface in the direction of rotation of the counter-thrust surface.

A notch may be formed from the wall of the aperture to part way across the width of each bearing surface. A lubricant supply passage may communicate with each notch. A groove may extend around the array of bearing surfaces so that the recesses open into the groove.

The invention will now be further described, by way of example, with reference to the accompanying drawings in which:

Fig. 1 is a fragmentary longitudinal section view of a turbocharger formed according to the invention, and Fig. 1A shows an enlarged fragment of Fig. 1;

Fig. 2 is a front view on an enlarged scale of a plate formed with a thrust bearing for the turbo-charger in Fig. 1;

Fig. 3 is a view of the other side of the plate in Fig. 2 formed with another thrust bearing for the turbocharger;

Fig. 4 is a section on line IV—IV in Fig. 2;

Fig. 5 is an enlarged fragment of Fig. 4;

Fig. 6 is a fragmentary and enlarged section on line VI—VI in Fig. 2;

Fig. 7 is an imaginary view of a fragmentary section on line A in Fig. 2, viewed along direction B if that section were straightened,

Fig. 8 is an imaginary view of a fragmentary section on line VIII—VIII in Fig. 2, if that section were straightened, and

Fig. 9 is a fragmentary and enlarged section on line IX—IX in Fig. 2.

The drawings show a turbocharger comprising a cast housing 2 provided with sleeve bearings 4 and 6 supporting a shaft 8 fast with radial inward flow turbine wheel 10. The turbine wheel rotatably drives the shaft 8 which in turn rotates a centrifugal compressor wheel 12 fast with the shaft. The compressor wheel 12 is in a compressor housing 14 attached to housing 2. Rotation of the wheel 12 accelerates air which is discharged into an annular diffuser 16 and then into a scroll-like outlet 18 from which the pressurised air is discharged via conduit 20 for supply, by any appropriate manner known per se as combustion air for an internal combustion engine. Exhaust gases are supplied by any appropriate manner known per se to an inlet 22 of an inlet volute 24 of a turbine housing 26 secured to the housing 2. The volute feeds the gases through an annular passage 28 to drive the turbine.

Lubricating oil from a supply (not shown) and fed to passage 30 travels via galleries 32 and 34 to lubricate the bearings 4 and 6 from which it emerges into chamber 36 for re-circulation via outlet 38 to the said supply.

A baffle plate arrangement 40 is clamped between housings 2 and 14. Arrangement 40 extends in proximity to and about a flange 42 of a bush or slinger 44 provided with a seal ring 46 against the wall of an aperture in side 48 of the compressor housing 14.

Shaft 8 has a shoulder 50 against which bush 52 is pressed by slinger 44 urged by compressor wheel 12 in reponse to the pressure of clamping nut 54. Thus the bush 52 and slinger 44 on the shaft are firmly clamped against shoulder 50 and rotate with the shaft as it rotates the compressor wheel.

Shaft 8 is held against substantial axial displacement by a thrust bearing arrangement provided by plate 56 interposed between the flange 42 and flange on bush 52. The plate 56, which may be of sintered metal, is formed with a circular aperture 60 receiving the cylindrical body of bush 52, and has holes 62 countersunk at 64 to receive heads of screws engaging threaded bores in the housing 2 to clamp the plate thereto.

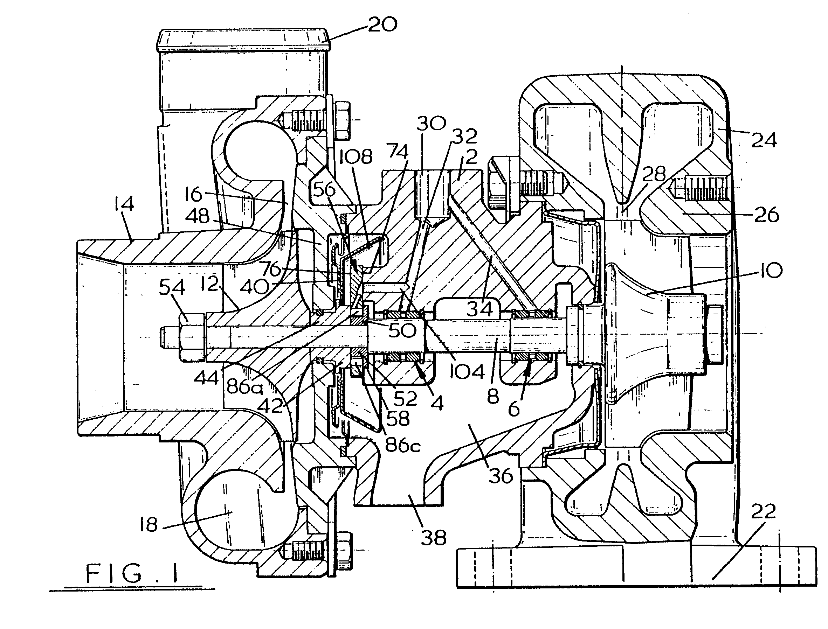

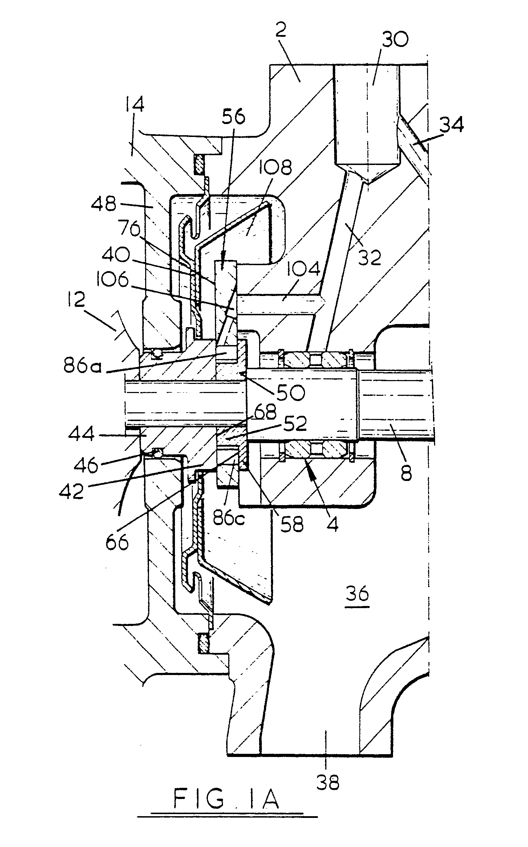

Flat side faces 66 and 68, (Fig. 1A) in spaced substantially parallel planes at substantially a right angle to the axis of shaft 8, on respective flanges 58 and 42 are counter-thrust surfaces each facing a respective annular thrust bearing 70 and 72 on respective sides 74 and 76 of the plate.

Each annular thrust bearing 70 or 72 centered on axis X of the aperture 60 comprises successive similar bearing surfaces 82a, 82b, 82c and 82d each extending through substantially 90° about axis X, each annular array of bearing surfaces being surrounded by a respective groove 78 or 80 on the side 74 or 76. Extending across the greater part of the width of each bearing surface to adjacent the outer periphery 84 of the array of bearing surfaces is a respective notch 86a, 86b, 86c and 86d extending substantially radially from aperture 60, adjacent notches being disposed at substantially 90° to one another.

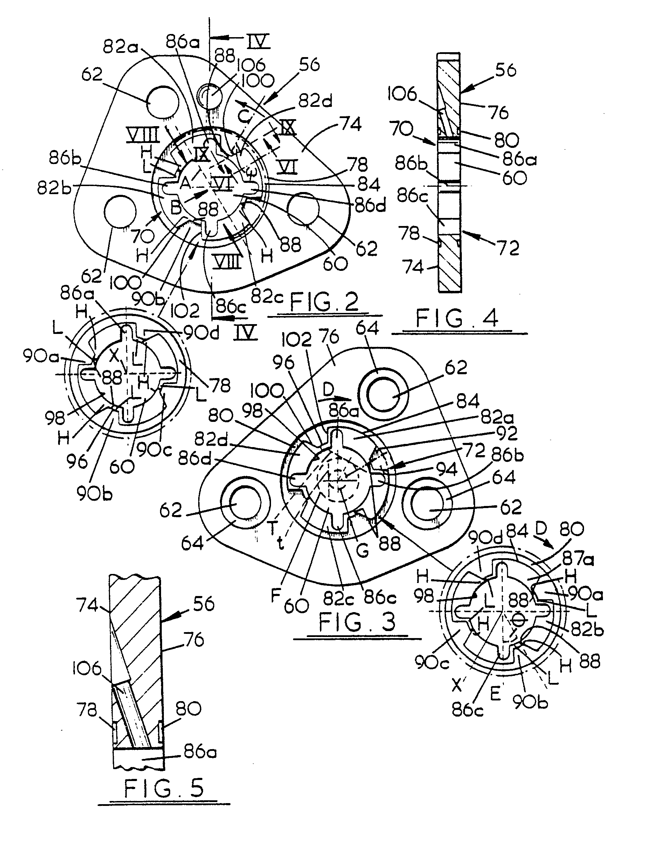

Arrow C or D (Fig. 2 or 3) shows the direction of rotation of counter-thrust surfaces 66 and 68 with respect to the corresponding thrust bearing 70 or 72.

Each bearing surface 82 is separated at each end from the adjacent bearing surface by a slight step 88 extending substantially radially with respect to axis X.

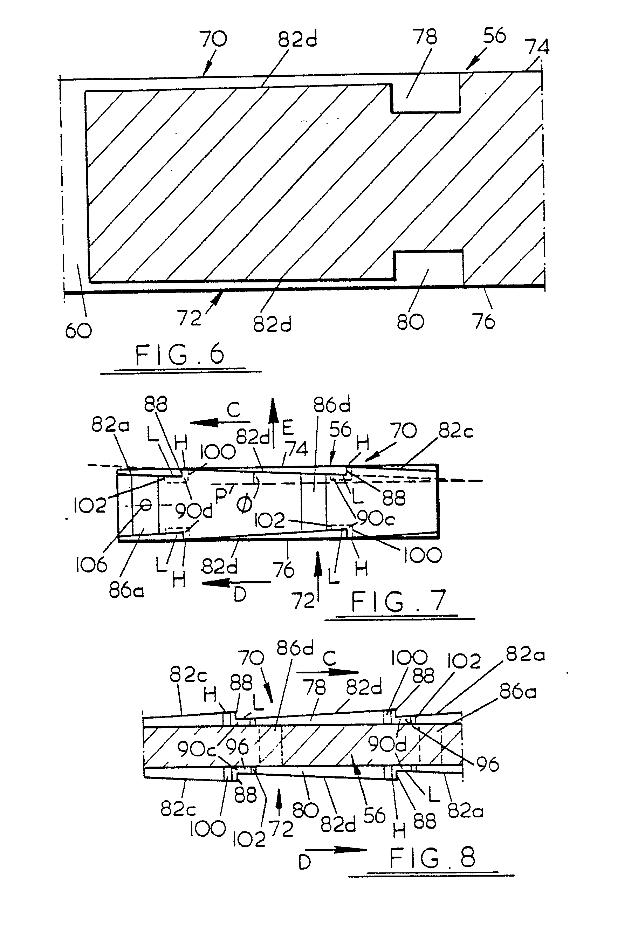

Each step 88 is due to each bearing surface 82 being inclined with respect to a datum plane P (Fig. 7) which extends parallel to the flat base of the corresponding groove 78 or 80. The datum plane is perpendicular to the nominal axis of the shaft 8 (Fig. 1). The bearing surfaces are inclined to the groove base such that as one moves across the bearing surfaces in the direction of rotation of the counter-thrust surface the perpendicular distance between the bearing surface and the groove base increases progressively. Thus adjacent the step at each end of a bearing surface one end L of the bearing surface can be considered as low and the other end H as high. Each bearing surface 82 between the ends H and L follows a substantially helical or wedge-like path. Thus the end H of any bearing surface projects beyond the end L of the same bearing surface in the direction (for example E in Fig. 7) in which the thrust bearing (for example 70) faces.

For a given thrust bearing 70 or 72 each step 88 thereon is angularly spaced by an angle θ from axis E, (Fig. 3), extending radially with respect to axis X, of the adjacent notch 86. The angle θ is taken, with respect to that notch, in the opposite direction to that in which the counter-thrust surface corresponding to that thrust face rotates past the notch. The angle θ may be, for example substantially 30°.

The taper or slope angle φ (Fig. 7) of each bearing surface to the datum plane P is small and may be of the order of minutes, for example 22 minutes.

Recesses 90a, 90b, 90c and 90d having bases level with the corresponding groove 78 or 80 extend generally radially inwardly of each thrust bearing 70 or 72 and are substantially equiangularly spaced about axis X. The existence of each recess 90 effectively eliminates a portion shown at 92 (Fig. 3) from the high end H of each bearing surface 82 and a portion shown at 94 (Fig. 3) from the adjacent low end L of the adjacent bearing surface.

Each recess 90 has a substantially arcuate side 96 centered on the axis X and substantially concentric with wall 98 of aperture 60 forming the inner periphery of both thrust bearings 70 and 72.

Edges 100 (see Fig. 3) of the bearing surfaces 90 in a given annular thrust bearing 70 or 72 substantially lie along respective tangents (one shown at T in Fig. 3) to a circle F centered on axis X and of less radius than aperture 60. Edges 102 (see Fig. 3) of the bearing surfaces in a given annular thrust bearing substantially lie along respective tangents (one shown at t in Fig. 3) to a circle G centered on axis X and of less radius than circle F.

It will be seen that edges 100 of the bearing surfaces which define boundaries of the recesses are close to or substantially coincide with steps 88. The edges 100 may be extended inwardly of the bearing to coincide with the radially innermost ends of the steps.

A gallery 104 branching from gallery 32 feeds lubricating oil into passage 106 open at one end in surface 74 and opening at the other into notch 86a. Thus oil is supplied to notch 86a, enters the space between the aperture wall 98 and shaft 8 and is distributed to the other notches. At the same time oil from the notches is propelled by rotation of counter-thrust surfaces over the thrust bearing 70 and 72 where interaction between the counter-thrust surfaces and the bearing surfaces pressurises the oil (i.e. hydrodynamic lubrication) squeezing oil radially outwardly into the grooves 78 and 80 and beyond so that oil emerges into space 108 (containing the baffle arrangement 40) feeding the oil to chamber 36.

In each portion 92 of a recess 90 omitted from the high end H of each bearing surface 82, the greater part of that portion results from cutting away some of the radially outer parts of the high end, by virtue of the radially outermost end of the edge 100 being with respect to axis X angularly closer to the low end L of that bearing surface than the radially inner-most end of edge 100.

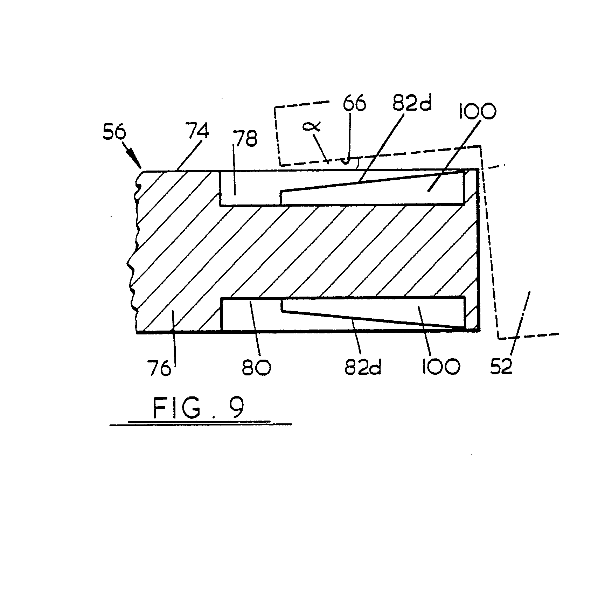

As the rotating shaft 8 performs a conical rotation the counter-thrust surfaces 66 and 68 are tilted at the cone angle α to sides 74 and 76 respectively of the plate 56, (see thrust surface 66 of the bush 52 in dotted lines in Fig. 9). Accordingly a radial portion of a said counter-thrust surface comes nearest to the corresponding thrust bearing 70 or 72 and that radial portion sliding over the thrust bearing is closest to the latter when said radial portion is opposite a high end H of a bearing surface 82. The occurrence of the thinnest oil layer between the counter-thrust surface and the bearing surface is confined to each high end H as the counter-thrust surface slides thereover. The occurrences of maximum shear forces in the lubricating oil are confined to ends H. Because portion 92 of recess 90 is omitted from each high end H the thinnest oil layer extends essentially along a line along edge 100. That line is of greatly reduced surface area in comparison with the surface area of recess portion 92 which would correspond substantially to the area of the thinnest oil layer if recesses 90 were not provided. Such reduction in surface area of the thrust face where maximum shear forces occur further reduces friction.

It will be seen from Fig. 9 that the edge 100 of the high end of the corresponding bearing surface 82 slopes at an angle which is the same or of the same order as the cone angle α of the conical rotation of the shaft 8. In order to attain that slope the edge 100 may be formed substantially in accordance with the expression

$$\text{Tan } \psi = \frac{\tan \alpha}{\tan \phi},$$

in which α is the aforesaid cone angle, φ is the aforesaid slope angle of the bearing surface 82, and ψ is the angle (see Fig. 2) between the radially extending step 88 and the edge 100. It will be appreciated that for small α and φ

$$\frac{\tan \alpha}{\tan \phi} \approx \frac{\alpha}{\phi}$$

By terminating the notches 86 short of outer periphery 84, the oil flow permeating the bearing arrangement is substantially limited to what it would be if the notches were absent and the passage 106 opened at aperture wall 98. Nevertheless the provision of the notches ensures that the whole width of each bearing surface 82 is supplied with oil.

## Claims

1. A turbo-charger comprising a rotary shaft extending through an aperture in an axial thrust bearing facing a rotating plane counter-thrust surface supported by the shaft and perpendicular to the axis of said shaft, the thrust bearing comprising a plurality of bearing surfaces (82a, 82b, 82c, 82d) disposed in succession in an annular array about the aperture, and a plurality of recesses (90a, 90b, 90c, 90d) each one of which is disposed between adjacent portions of a respective pair of bearing surfaces, the thrust bearing defining a datum plane which is perpendicular to the nominal axis of said shaft, each bearing surface being inclined to said datum plane so as to extend between circumferentially spaced low (L) and high (H) ends, the high end of each bearing surface being circumferentially spaced from the low end in the direction of rotation of the counter-thrust surface, and the edge (100) of the high end of each bearing surface extending both radially inwards and in the direction of rotation of the counter-thrust surface so as to be inclined to the radial direction, characterised in that the said edge (100) of the high end is defined by the boundary of the respective recess (90a, 90b, 90c, 90d), and the said edge of the high end is inclined downwards relative to the datum plane in the radially outwards direction.

2. A turbo-charger as claimed in claim 1, in which there is with respect to the circular array of bearing surfaces (82a, 82b, 82c, 82d) a radially extending step (88) between a portion of the high end of one bearing surface and the low end of the adjacent bearing surface.

3. A turbo-charger as claimed in claim 2, wherein each recess is formed substantially in accordance with the expression

$$\tan \psi = \frac{\tan \alpha}{\tan \phi},$$

in which α is the cone angle of conical rotation of the counter-thrust surface, φ is the angle of the slope of the bearing surface of each sector or tapered land, and ψ is the angle between the radially extending step (88) and said edge (100) of the high end of the adjacent bearing surface in the direction of rotation of the counter-thrust surface.

4. A turbo-charger as claimed in any one preceding claim, in which the thrust bearing further comprises at least one notch (86a, 86b, 86c, 86d) extending from the wall of said aperture to part way across the width of a said bearing surface (82a, 82b, 82c, 82d).

5. A turbo-charger as claimed in claim 4, in which the thrust bearing further comprises passage means (106) opening into the or at least one said notch to supply lubricant to the notch.

6. A turbo-charger as claimed in any one preceding claim, in which a groove (78, 80) extends around the array of bearing surfaces and the recesses open into the groove.

## Patentansprüche

1. Turbolader, mit einer drehbaren Welle, die sich durch eine Öffnung in einem Axialdrucklager erstreckt, das einer sich drehenden ebenen Gegendruckfläche gegenüberliegt, die von der Welle getragen ist und sich senkrecht zur Achse der Welle erstreckt, wobei das Drucklager eine Vielzahl von Lagerflächen (82a, 82b, 82c, 82d), die aufeinanderfolgend in einer ringförmigen Anordnung um die Öffnung angeordnet sind, und eine Vielzahl von Aussparungen (90a, 90b, 90c, 90d) aufweist, von denen jede zwischen benachbarten Bereichen eines entsprechenden Paares von Lagerflächen angeordnet ist, wobei das Drucklager eine Bezugsebene definiert, die senkrecht zu der Nennachse der Welle verläuft, wobei jede Lagerfläche gegenüber der Bezugsebene geneigt ist, so daß sie sich zwischen in Umfangsrichtung beabstandeten unteren (L) und oberen (H) Enden erstreckt, wobei das obere Ende jeder Lagerfläche in Umfangsrichtung beabstandet ist von dem unteren Ende in der Drehrichtung der Gegendruckfläche, und wobei die Kante (100) des oberen Endes jeder Lagerfläche sich sowohl radial nach innen als auch in der Drehrichtung der Gegendruckfläche erstreckt, so daß sie zur Radialrichtung geneigt ist, dadurch gekennzeichnet, daß die Kante (100) des oberen Endes von der Grenze der entsprechenden Aussparung (90a, 90b, 90c, 90d) gebildet wird und daß die Kante des oberen Endes nach unten relativ zu der Bezugsebene radial nach außen gerichtet ist.

2. Turbolader, nach Anspruch 1, dadurch gekennzeichnet, daß bezüglich der kreisförmigen Anordnung der Lagerflächen (82a, 82b, 82c, 82d) eine radial verlaufende Stufe (88) zwischen einem Teil des oberen Endes der einen Lagerfläche und dem unteren Ende der benachbarten Lagerfläche vorgesehen ist.

3. Turbolader nach Anspruch 2, dadurch gekennzeichnet, daß jede Aussparung im wesentlichen gemäß dem Ausdruck tan $\psi$=tan $\alpha$/tan $\phi$ ausgebildet ist, wobei $\alpha$ der Keilwinkel der konischen Drehung der Gegendruckfläche ist, $\phi$ der Neigungswinkel der Lagerfläche jedes Sektors oder sich verjüngenden Fläche ist, und $\psi$ der Winkel zwischen der radial verlaufenden Stufe (88) und der Kante (100) des oberen Endes der benachbarten Lagerfläche in Drehrichtung der Gegendruckfläche ist.

4. Turbolader nach einem der vorhergehenden Ansprüche, dadurch gekennzeichnet, daß das Drucklager weiterhin mindestens eine Aussparung (86a, 86b, 86c, 86d) aufweist, die sich ausgehend von der Wand der Öffnung erstreckt und über die Breite der jeweiligen Lagerfläche (82a, 82b, 82c, 82d) wegverläuft.

5. Turbolader nach Anspruch 4, dadurch gekennzeichnet, daß das Drucklager weiterhin eine Passage (106) aufweist, die sich in die Aussparung oder zumindest eine der Aussparungen erstreckt, um der Aussparung Schmiermittel zuzuführen.

6. Turbolader nach einem der vorhergehenden Ansprüche, dadurch gekennzeichnet, daß eine Nut (78, 80) sich um die Anordnung von Lagerflächen erstreckt und die Aussparungen sich in die Nut öffnen.

**Revendications**

1. Turbo-chargeur comprenant un arbre rotatif s'étendant à travers une ouverture dans un palier de butée axial faisant face à une surface de contre-palier, plane, rotative, portée par l'arbre et perpendiculaire à l'axe de l'arbre, le palier de butée comprenant une pluralité de surfaces d'appui (82a, 82b, 82c, 82d) disposées successivement dans une zone annulaire autour de l'ouverture, et une pluralité de cavités (90a, 90b, 90c, 90d) dont chacune est disposée entre des parties adjacentes d'une paire respective de surfaces d'appui, le palier de butée définissant un plan de référence qui est perpendiculaire à l'axe nominal de l'arbre, chaque surface d'appui étant inclinée par rapport à ce plan de référence de façon à s'étendre entre des extrêmités périphériquement espacées basses (L) et hautes (H), l'extrêmité haute de chaque surface d'appui étant périphériquement espacée de l'extrêmité basse dans le sens de rotation de la surface de contre-palier, et le bord (100) de l'extrêmité haute de chaque surface d'appui s'étendant aussi bien radialement vers l'intérieur que dans le sens de rotation de la surface de contre-palier, de façon à être inclinée dans le sens radial, turbo-chargeur caractérisé en ce que le bord (100) de l'extrêmité haute est défini par la limite des cavités respectives (90a, 90b, 90c, 90d), et que le bord de l'extrêmité haute est inclinée vers le bas par rapport au plan de référence, dans le sens dirigé radialement vers l'extérieur.

2. Turbo-chargeur selon la revendication 1, dans lequel il existe, par rapport à la zone circulaire des surfaces d'appui (82a, 82b, 82c, 82d), un gradin (88) s'étendant radialement, entre une portion de l'extrêmité haute d'une surface d'appui et l'extrêmité basse de la surface d'appui adjacente.

3. Turbo-chargeur selon la revendication 2 caractérisé en ce que chaque cavité est formée conformément à l'expression

$$\tan \psi = \frac{\tan \alpha}{\tan \phi},$$

dans laquelle $\alpha$ est l'angle de conicité de la rotation conique de la surface de contre-palier, $\phi$ est l'angle d'inclinaison de la surface d'appui de chaque secteur ou face éffilée et $\psi$ est l'angle compris entre le gradin (88) s'étendant radialement et le bord (100) de l'extrêmité haute de la surface d'appui adjacente, dans le sens de rotation de la surface de contre-palier.

4. Turbo-chargeur selon l'une quelconque des revendications précédentes caractérisé en ce que le palier de butée comprend en outre au moins une encoche (86a, 86b, 86c, 86d) s'étendant depuis la paroi de l'ouverture de façon à diviser la voie à travers la largeur de la surface d'appui (82a, 82b, 82c, 82d).

5. Turbo-chargeur selon la revendication 4 dans lequel le palier de butée comprend en outre un moyen de passage 106, s'ouvrant dans l'encoche ou au moins dans une des encoches pour introduire le lubrifiant dans l'encoche.

6. Turbo-chargeur selon l'une quelconque des revendications précédentes, caractérisé en ce qu'une rainure (78, 80) s'étend autour de la zone des surfaces d'appui et que les cavités s'ouvrent dans la rainure.

FIG. I

FIG 1A

FIG. 2

FIG. 3

FIG. 4

FIG. 5

FIG.6

FIG.7

FIG.8

FIG . 9